## Europäisches Patentamt

## European Patent Office

## Office européen des brevets

(19)

(11) Veröffentlichungsnummer: **0 191 731**
**B1**

(12)

# EUROPÄISCHE PATENTSCHRIFT

(45) Veröffentlichungstag der Patentschrift:
**12.04.89**

(51) Int. Cl.⁴: **B 65 G 47/24**

(21) Anmeldenummer: **86810061.1**

(22) Anmeldetag: **05.02.86**

(54) Fördereinrichtung zur Förderung scheibenförmiger Produkte.

(30) Priorität: **11.02.85 CH 607/85**
**11.02.85 CH 608/85**

(43) Veröffentlichungstag der Anmeldung:
**20.08.86 Patentblatt 86/34**

(45) Bekanntmachung des Hinweises auf die Patenterteilung:
**12.04.89 Patentblatt 89/15**

(84) Benannte Vertragsstaaten:
**CH DE FR GB IT LI NL**

(56) Entgegenhaltungen:
**CH-A- 643 197**
**US-A- 4 082 176**

(73) Patentinhaber: **SIG Schweizerische Industrie-Gesellschaft, CH-8212 Neuhausen am Rheinfall (CH)**

(72) Erfinder: **Graf, Paul, Sonnenbergstrasse 19, CH-8212 Neuhausen am Rheinfall (CH)**
Erfinder: **Fluck, René, Schiechtenbolweg 645, CH-8226 Schleitheim (CH)**

(74) Vertreter: **White, William et al, Isler AG Patentanwalts-Bureau Walchestrasse 23, CH-8006 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Eine Fördereinrichtung gemäss Oberbegriff des Anspruchs 1 ist aus US-A-4 082 176 bekannt.

Auf zwei seitlich mit Abstand voneinander angeordneten Förderbändern werden flachseitig aneinanderliegende Pommes Chips gefördert. Zwischen den Bändern ist eine feststehende Schiene angeordnet. Oberhalb der Bänder sind zwei in Transportrichtung voneinander beabstandete Finger vertikal beweglich. Beim Absenken dieser Finger wird jeweils ein Chip angehalten. Die Kraft des Fingers auf den Chip erzeugt zusammen mit der Vorschubkraft der Bänder ein aufrichtendes Moment, so dass sich der angehaltene und die nachfolgenden Chips aufrichten. Dabei liegen sie nun auf der Schiene auf und sind von den Bändern abgehoben. Dadurch wird Reibung zwischen Bändern und stillstehenden Chips vermieden, so dass das aufrichtende Moment stoppt und die Chips nicht rückwärts umfallen können. Durch sequentielles Bewegen der Finger werden aus der Chips-Kolonne Verpackungsportionen gebildet. In einer Variante sind die Transportbänder durch vibrierende Stäbe ersetzt.

Eine weitere Fördereinrichtung ist aus CH-A 367 751 bekannt. Diese bekannte Einrichtung fördert hochkant gestapelte, aneinander anliegende Biscuits mittels einer Vibrationsförderrinne, der ein Förderband vorgeschaltet ist. Die Förderrinne mündet in einen feststehenden Kanal, aus welchem die Biscuits mittels eines Ausstossschiebers portioniert werden. Oberhalb der Förderrinne ist ein Taster angeordnet, der bei starker Schräglage der Biscuits, also bei ungenügendem Nachschub, die Bewegung des Ausstossschiebers unterbricht. Bei dieser bekannten Vorrichtung steht bei abgeschaltetem Ausstossschieber der Biscuitstapel in der vibrierenden Förderrinne still, was zum Abrieb der Biscuitkanten und allenfalls zum Bruch von Biscuits führen kann.

Eine weitere Fördereinrichtung dieser Art ist aus dem U.S. Patent 4 462 522 bekannt. In dieser Schrift ist eine Einrichtung mit mehreren nebeneinander angeordneten, durch eine gemeinsame Kurbelwelle angetriebenen Vibrationsrinnen beschrieben. Die Förderung der Produkte lässt sich dabei steuern durch An- und Abschalten des Antriebs der Kurbelwelle. Damit wird allerdings die Förderung in sämtlichen Rinnen gleichzeitig unterbrochen oder eingeschaltet. Dies ist dann ungünstig, wenn die Rinnen unterschiedliche Förderraten aufweisen, beispielsweise wenn in bloss einer der Rinnen ein Stau auftritt.

Der Erfindung liegt die Aufgabe zugrunde, eine Fördereinrichtung der eingangs genannten Art derart auszubilden, dass bei mehreren nebeneinander angeordneten Förderrinnen die Förderwirkung dieser Rinnen auf einfache Art einzeln abschaltbar ist. Diese Aufgabe wird durch die Merkmalkombination gemäss Anspruch 1 gelöst.

Bei voller Förderrinne werden die Produkte durch die feststehende Schiene unterstützt und die Förderwirkung der Rinne deshalb ausgeschaltet, ohne dass der Vibrationsantrieb abgeschaltet werden muss. Bei mehreren nebeneinander angeordneten Rinnen mit gemeinsamem Antrieb ist daher eine einfache Steuerung der einzelnen Rinne möglich. Die Produktkanten, welche während der Förderung die Rinne berühren, werden vor Abrieb und die Produkte vor Bruch geschützt. Die Schienen sind mittels je eines Antriebsorgans anhebbar. Dadurch kann, z.B. bei stockender Abnahme der Produkte, die Förderwirkung der Auflage auf die Produkte aufgehoben werden, so dass die Produkte in der Förderrinne geschont werden.

Nachfolgend werden Ausführungsbeispiele der Erfindung anhand der Zeichnung erläutert. Darin zeigt:

Fig. 1 einen Längsschnitt nach der Linie I-I in Fig. 2 durch eine erste Ausführungsform,

Fig. 2 eine Frontansicht der Einrichtung nach Fig. 1,

Fig. 3 einen Querschnitt längs der Linie III-III in Fig. 1,

Fig. 4 und 5 eine schematische Darstellung einer leicht abgewandelten Ausführungsform im Quer- und Längsschnitt bei abgesenkter Schiene, und

Fig. 6 und 7 eine Darstellung gemäss Fig. 4 und 5, jedoch mit angehobener Schiene.

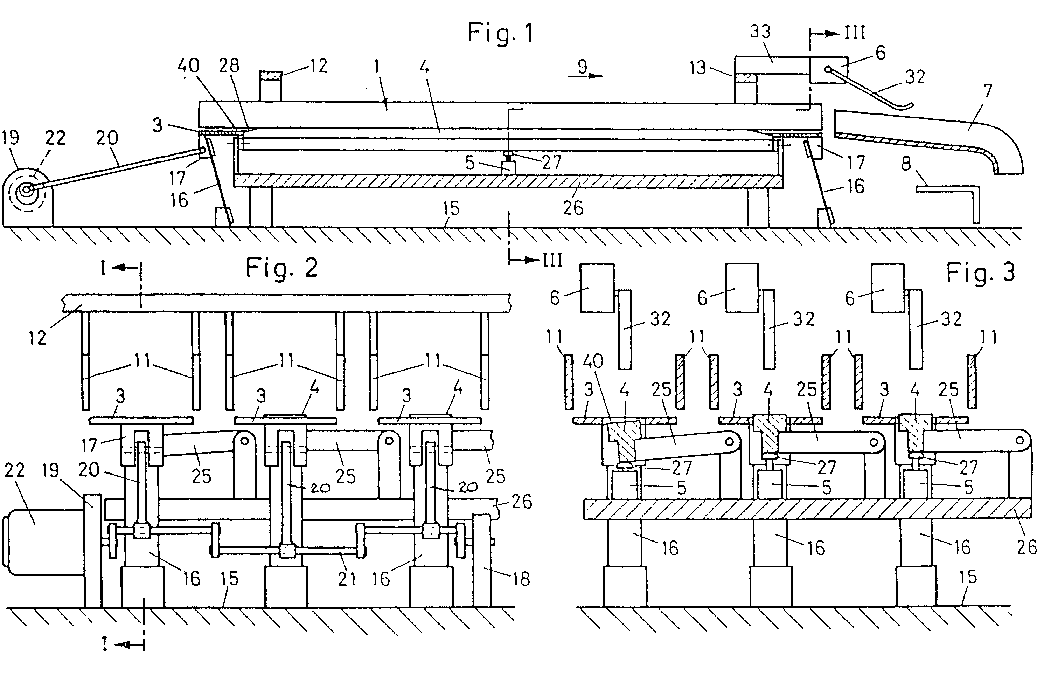

Die Einrichtung nach Fig. 1–3 umfasst drei nebeneinander angeordnete Vibrationsförderrinnen 1, welche Biscuits hochkant gestapelt und aneinander anliegend in Förderrichtung 9 je einem feststehenden Kanal 7 zuführen, von dessen unterem Ende die Biscuits mittels eines Portionierschiebers 8 weggeschoben werden. Jede Förderrinne 1 umfasst eine vibrierende Auflageplatte 3, auf welcher die Biscuits hochkant stehen, und zwei feststehende Seitenwände 11 zur seitlichen Führung der Biscuits. Die Seitenwände 11 sind an Querträgern 12, 13 befestigt. Die Platte 3 ist über zwei Blattfedern 16 auf einem feststehenden Maschinenrahmen 15 gelagert. Die Federn 16 sind an der Platte 3 mittels Lagerblöcken 17 befestigt. Am vorderen Lagerblock 17 ist eine Stange 20 angelenkt. Die drei Stangen 20 der drei Förderrinnen 1 werden durch eine gemeinsame Kurbelwelle 21 synchron aber phasenverschoben durch einen Motor 22 angetrieben. Die Kurbelwelle 21 ist in mit dem Rahmen 15 verbundenen Platten 18, 19 drehbar gelagert. Durch diese Ausbildung wird auf elegante Weise eine gute Auswuchtung erreicht, was bei Einzelantrieb der Förderrinnen nur schwer zu erreichen ist.

Bei solchen parallel geschalteten Förderrinnen 1 kommt es vor, dass in bloss einer Förderrinne ein Stau auftritt. Um trotz des gemeinsamen Antriebs der drei Förderrinnen 1 die Förderwirkung dieser einen Förderrinne abschalten zu können, haben die Platten 3 mittig über den grössten Teil ihrer Länge eine rechteckige Öffnung 40, durch welche eine Schiene 4 ragt. Die Schiene 4 ist auf Schwenkhebeln 25 befestigt, die auf einem mit dem Rahmen 15 verbundenen Zwischenträger 26 um eine zur Längsrichtung der Förderrinne 1 parallele Achse schwenkbar gelagert sind. Die Schiene 4 ist damit parallel zur Rinnenlängsrichtung anhebbar und überragt in ihrer oberen Endstellung die Platte 3.

Zum Anheben der Schiene 4 ist ein Solenoid 5 mit einem Stössel 27 mittig unter der Schiene 4 auf dem Zwischenträger 26 befestigt. Um auch bei angehobener Schiene 4 geringfügige Verschiebungen der Biscuits in Förderrichtung 9 ohne Verletzungsgefahr zu ermöglichen, weist die Schiene 4 an ihren beiden Enden Anschrägungen 28 auf, so dass bei angehobener Schiene 4 ihre Enden die Platte 3 nicht überragen.

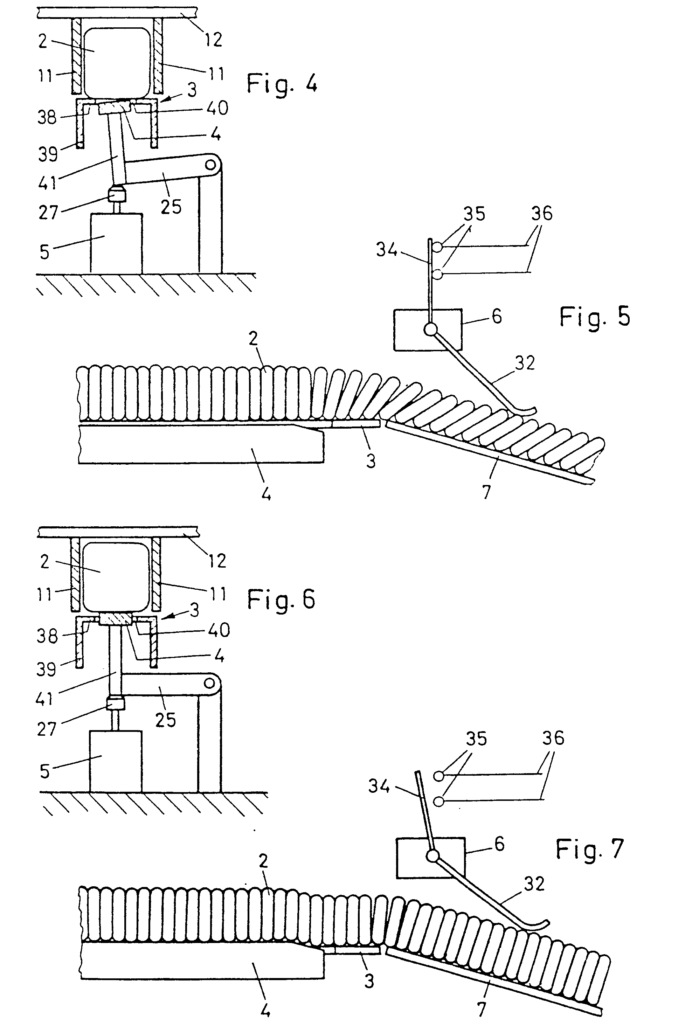

Zur Steuerung des Solenoids 5 tastet ein Taster 6 mit einem Tastarm 32 die Oberkante der Biscuits im Kanal 7 ab. Der Taster 6 ist an einem mit dem Querträger 13 verbundenen Träger 33 befestigt. Die Wirkungsweise dieser Steuerung ist in den Figuren 4 bis 7 dargestellt: Bei normaler Förderung (Fig. 4 und 5) sind die Biscuits im Kanal 7 relativ stark geneigt, so dass der Tastarm 32 abgesenkt und Kontakte 35 über ein Schaltglied 34 des Tasters 6 geschlossen sind. Das Solenoid 5 ist damit erregt und zieht den Stössel 27 entgegen einer Federvorspannung in seine untere Endlage. Die Schiene 4 verschwenkt in ihre untere Endstellung ausser Eingriff mit den Biscuits 2, so dass die vibrierende Auflage 3 die Biscuits 2 fördert.

Tritt hingegen beim Portionierschieber 8 ein Stau auf, so stellen sich die Biscuits 2 im Kanal 7 steiler auf, heben den Tastarm 32 an und unterbrechen damit die Verbindung zwischen den Kontakten 35. Das Solenoid 5 wird entregt und der Stössel 27 hebt die Schiene 4 in ihre obere Endlage an, in welcher sie die Auflage 3 überragt und somit die Unterstützung der Biscuits 2 übernimmt (Fig. 6 und 7). Die Förderwirkung der Förderrinne 1 ist damit unterbrochen.

Bei der in den Figuren 4 bis 7 dargestellten Variante besteht die Auflage 3 aus einem U-Profil 38, 39, dessen Steg 38 die Öffnung 40 aufweist. Die Schenkel 39 des Profils dienen als Versteifung, so dass die vibrierende Auflage 3 sehr dünnwandig und leicht ausgebildet werden kann. Damit können die auf den Rahmen 15 übertragenen Vibrationen gering gehalten werden. Die Schiene 4 ist über Stege 41 mit den Schwenkhebeln 25 verbunden.

Das Solenoid 5 kann zusätzlich zum oder anstelle des Tasters 6 durch andere Signale angesteuert werden, beispielsweise durch einen auf den Betriebszustand des Portionierschiebers 8 ansprechenden Schalter, durch einen auf die Förderrate der der Förderrinne 1 vorgeschalteten Zuführeinrichtung ansprechenden Schalter oder durch einen Maschinenstoppschalter.

**Patentansprüche**

1. Fördereinrichtung zur Förderung hochkant gestapelter, aneinander anliegender, scheibenförmiger Produkte (2), insbesondere Biscuits, mit einer Vibrationsförderrinne (1) umfassend eine vibrierende Auflage (3) für die Produkte (2), wobei über mindestens einen Teil der Förderrinnenlänge die Breite der Auflage (3) nur einen Teil der Förderrinnenbreite beträgt und im verbleibenden Teil der Förderrinnenbreite beträgt und im verbleibenden Teil der Förderrinnenbreite eine nicht mitvibrierende Schiene (4) angeordnet ist, dadurch gekennzeichnet, dass mehrere Rinnen (1) mit je einer Schiene (4) nebeneinander angeordnet und durch einen gemeinsamen Antrieb (21) angetrieben sind und dass die Schienen (4) mittels je eines Antriebsorgans (5) einzeln über die Höhe der Auflage (3) anhebbar sind.

2. Einrichtung nach Anspruch 1, dadurch gekennzeichnet, dass jedes Antriebsorgan (5) durch je einen Fühler (6) gesteuert ist, der die Schräglage der Produkte (2) abtastet.

3. Einrichtung nach Anspruch 2, dadurch gekennzeichnet, dass die Fühler aus je einem die Oberkante der Produkte stromabwärts der zugehörigen Schiene (4) abtastenden Taster (6) bestehen.

4. Einrichtung nach Anspruch 3, dadurch gekennzeichnet, dass der Taster (6) oberhalb eines stromabwärts der Förderrinne (1) angeordneten feststehenden Kanals (7) angreift.

5. Einrichtung nach einem der Ansprüche 1 bis 4, dadurch gekennzeichnet, dass die Rinnen (1) je eine Öffnung (40) aufweisen, durch welche die Schienen (4) ragen.

6. Einrichtung nach einem der Ansprüche 1 bis 5, dadurch gekennzeichnet, dass die Schienen (4) mindestens an ihrem in Förderrichtung vorderen Ende eine Anschrägung (28) aufweisen.

7. Einrichtung nach einem der Ansprüche 1 bis 6, dadurch gekennzeichnet, dass die Schienen auf mindestens je einem Schwenkhebel (25) gelagert sind.

**Claims**

1. Conveying device for conveying disc-shaped products (2) which are stacked on edge and rest against one another, in particular biscuits, with a vibrating conveyor trough (1) comprising a vibrating support (3) for the products (2), the width of the support (3) representing only a part of the conveyor trough width over at least a part of the conveyor trough length and a rail (4), which does not vibrate, being arranged in the remaining part of the conveyor trough width, characterised in that a plurality of troughs (1) with a respective rail (4) are arranged side by side and driven by a common drive (21), and that the rails (4) can be individually raised above the height of the support (3) by means of a respective drive member (5).

2. Device according to claim 1, characterised in that each drive member (5) is controlled by a respective detector (6), which senses the oblique position of the products (2).

3. Device according to claim 2, characterised in that the detectors consist of a respective sensor (6) which senses the upper edge of the products downstream of the relevant rail (4).

4. Device according to claim 3, characterised in that the sensor (6) acts above a stationary channel (7) arranged downstream of the conveyor trough (1).

5. Device according to one of claims 1 to 4, characterised in that the troughs (1) comprise a respective opening (40) through which the rails (4) project.

6. Device according to one claims 1 to 5, characterised in that the rails (4) comprise a chamfer (28) at least at their end which is disposed at the front in the conveying direction.

7. Device according to one of claims 1 to 6, characterised in that the rails are mounted on at least one respective pivoted lever (25).

**Revendications**

1. Transporteur pour le transport de produits en forme de disque (2), en particulier de biscuits, empilés de chant et mutuellement adjacents, comportant une gouttière transporteuse à vibrations (1) qui comprend une surface d'appui vibrante (3) pour les produits (2), la largeur de la surface d'appui (3) ne s'élevant, sur une partie au moins de la longueur de la gouttière transporteuse, qu'à une fraction de la largeur de cette gouttière, et des rails (4) ne vibrant pas avec la gouttière étant disposés dans la partie restante de la largeur de ladite gouttière, caractérisé en ce que plusieurs gouttières (1) contenant chacune un rail (4) sont disposées côte à côte et sont entraînées par un mécanisme d'entraînement commun (21), et en ce que les rails (4) peuvent être soulevés individuellement au-dessus du niveau de la surface d'appui (3) au moyen d'un organe d'entraînement (5) pour chacun d'entre eux.

2. Transporteur selon la revendication 1, caractérisé en ce que chaque organe d'entraînement (5) est commandé par un détecteur respectif (6) qui détecte la position inclinée des produits (2).

3. Transporteur selon la revendication 2, caractérisé en ce que les détecteurs se composent chacun d'un palpeur (6) qui palpe le bord supérieur des produits an aval du rail (4) associé.

4. Transporteur selon la revendication 3, caractérisé en ce que le palpeur (6) agit au-dessus d'un canal fixe (7) disposé en aval de la gouttière transporteuse (1).

5. Transporteur selon l'une quelconque des revendications 1 à 4, caractérisé en ce que les gouttières (1) présentent chacune une ouverture (40) à travers laquelle les rails (4) font saillie.

6. Transporteur selon l'une quelconque des revendicatons 1 à 5, caractérisé en ce que les rails (4) présentent un biseau (28), au moins à leur extrémité avant dans le sens du transport.

7. Transporteur selon l'une quelconque des revendications 1 à 6, caractérisé en ce que les rails sont montés chacun sur au moins en levier pivotant (25).

Fig.1

Fig.2

Fig.3

Fig. 4

Fig. 5

Fig. 6

Fig. 7